# EUROPEAN PATENT APPLICATION

(11) **EP 4 598 094 A1**
(43) Date of publication of application: **06.08.2025**
(21) Application number: 23869652.0
(22) Date of filing: 18.05.2023
(51) Int. Cl.: H04W 24/02, H04W 36/18, H04W 88/04

(54) **METHOD AND APPARATUS FOR ENTERING CONNECTED STATE, AND TERMINAL AND NETWORK DEVICE**

(30) Priority: 26.09.2022 CN 202211176342
(71) Applicant: Datang Mobile Communications Equipment Co., Ltd., Beijing 100085 (CN)
(72) Inventor: ZHANG, Huiying, Beijing 100085 (CN); ZHAO, Yali, Beijing 100085 (CN)
(74) Representative: Studio Torta S.p.A.
(86) International application number: PCT/CN2023/094981
(87) International publication number: WO 2024/066399

(57) **Abstract**

Embodiments of the present disclosure relate to the technical field of communications, and provide a method and apparatus for entering a connected state, and a terminal and a network device. The method for entering a connected state comprises: receiving a reconfiguration message sent by a network device, wherein the reconfiguration message comprises information of a target relay terminal; and when it is determined that there are other paths for connection with the network device, sending a first message to the target relay terminal, wherein the first message is used for triggering the target relay terminal to enter a connected state from an idle state or an inactive state or to keep in the connected state. In this way, by means of the first message, the relay terminal in a non-connected state is triggered to enter the connected state, so that a remote terminal can communicate with the network device by means of the relay terminal, thereby solving the problem in the prior art that when determining that there are other paths for connection with a network device, a remote terminal cannot trigger a relay terminal in a non-connected state to enter a connected state, and thus the remote terminal cannot communicate with the network device by means of the relay terminal.

## Description

### CROSS-REFERENCES TO RELATED APPLICATIONS

The present application claims priority to Chinese patent application No. 202211176342.X filed on September 26, 2022, entitled "Method and Apparatus for Entering Connected State, and Terminal and Network Device", which is hereby incorporated by reference in its entirety.

### FIELD

The present application relates to the field of communications, and in particular, to methods and apparatuses for entering connected state, user equipments and a network device.

### BACKGROUND

The 3rd generation partnership project (3GPP) supports multi-path transmission, for example, a remote user equipment (UE) may support to access a network device through a UE to network (U2N) relay UE and a Uu interface simultaneously.

In the above multi-path transmission scenario, in case that an indirect path is added or modified, if the remote UE determines that there is a direct path for connecting to the network device, the remote UE transmits a radio resource control (RRC) configuration complete message to the network device through the direct path, resulting in the remote UE being unable to communicate with the network device through the relay UE.

### BRIEF SUMMARY

Embodiments of the present application provide methods and apparatuses for entering connected state, user equipments (UEs) and a network device, which are used to solve a problem that a remote UE cannot communicate with a network device through a relay UE in case that there are other paths for connecting to the network device.

An embodiment of the present application provides a method for entering connected state, performed by a remote user equipment (UE), including:
receiving a reconfiguration message transmitted from a network device, where the reconfiguration message includes information of a target relay UE; and
in case of determining that other paths for connecting to the network device exist, transmitting a first message to the target relay UE, where the first message is used to trigger the target relay UE to enter connected state from idle state or inactive state, or remain in connected state.

In an embodiment, the first message includes a reconfiguration complete message or a sidelink message.

In an embodiment, the first message includes the reconfiguration complete message, and the reconfiguration message further includes first indication information, and where transmitting the first message to the target relay UE includes:
transmitting the reconfiguration complete message to the target relay UE based on the first indication information;
where the first indication information is used to indicate the remote UE to transmit the reconfiguration complete message to the network device through the target relay UE.

In an embodiment, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the first message includes the sidelink message, the sidelink message includes second indication information, and the second indication information is used to indicate the target relay UE to enter connected state from idle state or inactive state, or remain in connected state.

In an embodiment, the reconfiguration message further includes third indication information, and where transmitting the first message to the target relay UE includes:
in case of determining, based on the third indication information, to transmit the sidelink message to the target relay UE, transmitting the sidelink message to the target relay UE;
where the third indication information is used to indicate the remote UE whether to transmit the sidelink message to the target relay UE.

In an embodiment, the sidelink message includes at least one of the following:
PC5-radio resource control (RRC) based sidelink message;
sidelink media access control layer control element;
sidelink scheduling control information; or
PC5-S based sidelink message.

In an embodiment, transmitting the first message to the target relay UE includes:
establishing a unicast connection with the target relay UE; and
transmitting the first message to the target relay UE through the unicast connection.

An embodiment of the present application further provides a method for entering connected state, performed by a target relay user equipment (UE), including:
receiving a first message transmitted from a remote UE; and
based on the first message, entering connected state from idle state or inactive state, or remaining in connected state.

In an embodiment, the first message includes a reconfiguration complete message or a sidelink message.

In an embodiment, the first message includes the reconfiguration complete message, the reconfiguration message further includes first indication information, and the first indication information is used to indicate the remote UE to transmit the reconfiguration complete message to a network device through the target relay UE.

In an embodiment, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the first message includes the sidelink message, the sidelink message includes second indication information, and where based on the first message, entering connected state from idle state or inactive state, or remaining in connected state includes:
based on the second indication information, entering connected state from idle state or inactive state, or remaining in connected state;
where the second indication information is used to indicate the target relay UE to enter connected state from idle state or inactive state, or remain in connected state.

In an embodiment, the reconfiguration message further includes third indication information, and the third indication information is used to indicate the remote UE whether to transmit the sidelink message to the target relay UE.

In an embodiment, the sidelink message includes at least one of the following:
PC5-radio resource control (RRC) based sidelink message;
sidelink message for medium access control user edge;
sidelink message for sidelink control information; or
PC5-S based sidelink message.

In an embodiment, receiving the first message transmitted from the remote UE includes:
establishing a unicast connection with the remote UE; and
receiving the first message through the unicast connection.

An embodiment of the present application further provides a method for entering connected state, performed by a network device, including:
transmitting a reconfiguration message to a remote user equipment (UE), where the reconfiguration message includes information of a target relay UE and first indication information; or, the reconfiguration message includes information of a target relay UE and third indication information;
where the first indication information is used to indicate the remote UE to transmit a reconfiguration complete message to the network device through the target relay UE;
where the third indication information is used to indicate the remote UE whether to transmit a sidelink message to the target relay UE.

In an embodiment, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the sidelink message includes at least one of the following:
PC5-radio resource control (RRC) based sidelink message;
sidelink media access control layer control element;
sidelink scheduling control information; or
PC5-S based sidelink message.

An embodiment of the present application further provides a remote user equipment (UE), including a memory, a transceiver, and a processor;
where the memory is used for storing a computer program; the transceiver is used for receiving and transmitting data under control of the processor; and the processor is used for reading the computer program in the memory and performing the following operations:
receiving a reconfiguration message transmitted from a network device, where the reconfiguration message includes information of a target relay UE; and
in case of determining that other paths for connecting to the network device exist, transmitting a first message to the target relay UE, where the first message is used to trigger the target relay UE to enter connected state from idle state or inactive state, or remain in connected state.

In an embodiment, the first message includes a reconfiguration complete message or a sidelink message.

In an embodiment, the first message includes the reconfiguration complete message, and the reconfiguration message further includes first indication information, and where transmitting the first message to the target relay UE includes:
transmitting the reconfiguration complete message to the target relay UE based on the first indication information;
where the first indication information is used to indicate the remote UE to transmit the reconfiguration complete message to the network device through the target relay UE.

In an embodiment, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the first message includes the sidelink message, the sidelink message includes second indication information, and the second indication information is used to indicate the target relay UE to enter connected state from idle state or inactive state, or remain in connected state.

In an embodiment, the reconfiguration message further includes third indication information, and where transmitting the first message to the target relay UE includes:
in case of determining, based on the third indication information, to transmit the sidelink message to the target relay UE, transmitting the sidelink message to the target relay UE;
where the third indication information is used to indicate the remote UE whether to transmit the sidelink message to the target relay UE.

In an embodiment, the sidelink message includes at least one of the following:
PC5-radio resource control (RRC) based sidelink message;
sidelink media access control layer control element;
sidelink scheduling control information; or
PC5-S based sidelink message.

In an embodiment, transmitting the first message to the target relay UE includes:
establishing a unicast connection with the target relay UE; and
transmitting the first message to the target relay UE through the unicast connection.

An embodiment of the present application further provides a target relay user equipment (UE), including a memory, a transceiver, and a processor;
where the memory is used for storing a computer program; the transceiver is used for receiving and transmitting data under control of the processor; and the processor is used for reading the computer program in the memory and performing the following operations:
receiving a first message transmitted from a remote UE; and
based on the first message, entering connected state from idle state or inactive state, or remaining in connected state.

In an embodiment, the first message includes a reconfiguration complete message or a sidelink message.

In an embodiment, the first message includes the reconfiguration complete message, the reconfiguration message further includes first indication information, and the first indication information is used to indicate the remote UE to transmit the reconfiguration complete message to a network device through the target relay UE.

In an embodiment, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the first message includes the sidelink message, the sidelink message includes second indication information, and where based on the first message, entering connected state from idle state or inactive state, or remaining in connected state includes:
based on the second indication information, entering connected state from idle state or inactive state, or remaining in connected state;
where the second indication information is used to indicate the target relay UE to enter connected state from idle state or inactive state, or remain in connected state.

In an embodiment, the reconfiguration message further includes third indication information, and the third indication information is used to indicate the remote UE whether to transmit the sidelink message to the target relay UE.

In an embodiment, the sidelink message includes at least one of the following:
PC5-radio resource control (RRC) based sidelink message;
sidelink message for medium access control user edge;
sidelink message for sidelink control information; or
PC5-S based sidelink message.

In an embodiment, receiving the first message transmitted from the remote UE includes:
establishing a unicast connection with the remote UE; and
receiving the first message through the unicast connection.

An embodiment of the present application further provides a network device, including a memory, a transceiver, and a processor;
where the memory is used for storing a computer program; the transceiver is used for receiving and transmitting data under control of the processor; and the processor is used for reading the computer program in the memory and performing the following operations:
transmitting a reconfiguration message to a remote user equipment (UE), where the reconfiguration message includes information of a target relay UE and first indication information; or, the reconfiguration message includes information of a target relay UE and third indication information;
where the first indication information is used to indicate the remote UE to transmit a reconfiguration complete message to the network device through the target relay UE;
where the third indication information is used to indicate the remote UE whether to transmit a sidelink message to the target relay UE.

In an embodiment, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the sidelink message includes at least one of the following:
PC5-radio resource control (RRC) based sidelink message;
sidelink media access control layer control element;
sidelink scheduling control information; or
PC5-S based sidelink message.

An embodiment of the present application further provides an apparatus for entering connected state, used in a remote user equipment (UE), including:
a receiving unit, used for receiving a reconfiguration message transmitted from a network device, where the reconfiguration message includes information of a target relay UE; and
a transmitting unit, used for transmitting a first message to the target relay UE in case of determining that other paths for connecting to the network device exist, where the first message is used to trigger the target relay UE to enter connected state from idle state or inactive state, or remain in connected state.

In an embodiment, the first message includes a reconfiguration complete message or a sidelink message

In an embodiment, the first message includes the reconfiguration complete message, and the reconfiguration message further includes first indication information;
the transmitting unit is used for transmitting the reconfiguration complete message to the target relay UE based on the first indication information;
where the first indication information is used to indicate the remote UE to transmit the reconfiguration complete message to the network device through the target relay UE.

In an embodiment, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the first message includes the sidelink message, the sidelink message includes second indication information, and the second indication information is used to indicate the target relay UE to enter connected state from idle state or inactive state, or remain in connected state.

In an embodiment, the reconfiguration message further includes third indication information;
the transmitting unit is used for transmitting the sidelink message to the target relay UE in case of determining, based on the third indication information, to transmit the sidelink message to the target relay UE;
where the third indication information is used to indicate the remote UE whether to transmit the sidelink message to the target relay UE.

In an embodiment, the sidelink message includes at least one of the following:
PC5-radio resource control (RRC) based sidelink message;
sidelink media access control layer control element;
sidelink scheduling control information; or
PC5-S based sidelink message.

In an embodiment, the apparatus further includes a connecting unit;
the connecting unit is used for establishing a unicast connection with the target relay UE; and
the transmitting unit is used for transmitting the first message to the target relay UE through the unicast connection.

An embodiment of the present application further provides an apparatus for entering connected state, used in a target relay user equipment (UE), including:
a receiving unit, used for receiving a first message transmitted from a remote UE; and
a processing unit, used for based on the first message, entering connected state from idle state or inactive state, or remaining in connected state.

In an embodiment, the first message includes a reconfiguration complete message or a sidelink message.

In an embodiment, the first message includes the reconfiguration complete message, the reconfiguration message further includes first indication information, the transmitting unit is used for transmitting the reconfiguration complete message to the target relay UE based on the first indication information;
the first indication information is used to indicate the remote UE to transmit the reconfiguration complete message to a network device through the target relay UE.

In an embodiment, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the first message includes the sidelink message, and the sidelink message includes second indication information; the second indication information is used to indicate the target relay UE to enter connected state from idle state or inactive state, or remain in connected state.

In an embodiment, the reconfiguration message further includes third indication information, the transmitting unit is used for transmitting the sidelink message to the target relay UE in case of determining, based on the third indication information, to transmit the sidelink message to the target relay UE;
the third indication information is used to indicate the remote UE whether to transmit the sidelink message to the target relay UE.

In an embodiment, the sidelink message includes at least one of the following:
PC5-radio resource control (RRC) based sidelink message;
sidelink media access control layer control element;
sidelink scheduling control information; or
PC5-S based sidelink message.

In an embodiment, the apparatus further includes a connecting unit;
the connection unit is used for establishing a unicast connection with the target relay UE; and
the transmitting unit is used for transmitting the first message to the target relay UE through the unicast connection.

An embodiment of the present application further provides an apparatus for entering connected state, used in a network device, including:
a transmitting unit, used for transmitting a reconfiguration message to a remote user equipment (UE), where the reconfiguration message includes information of a target relay UE and first indication information; or, the reconfiguration message includes information of a target relay UE and third indication information;
where the first indication information is used to indicate the remote UE to transmit a reconfiguration complete message to the network device through the target relay UE;
where the third indication information is used to indicate the remote UE whether to transmit a sidelink message to the target relay UE.

In an embodiment, the first message includes a reconfiguration complete message or a sidelink message.

In an embodiment, the first message includes the reconfiguration complete message, the reconfiguration message further includes first indication information, and the first indication information is used to indicate the remote UE to transmit the reconfiguration complete message to the network device through the target relay UE.

In an embodiment, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the first message includes the sidelink message, the sidelink message includes second indication information, the processing unit is used for based on the second indication information, entering connected state from idle state or inactive state, or remaining in connected state;
where the second indication information is used to indicate the target relay UE to enter connected state from idle state or inactive state, or remain in connected state.

In an embodiment, the reconfiguration message further includes third indication information, and the third indication information is used to indicate the remote UE whether to transmit the sidelink message to the target relay UE.

In an embodiment, the sidelink message includes at least one of the following:
PC5-radio resource control (RRC) based sidelink message;
sidelink message for medium access control user edge;
sidelink message for sidelink control information; or
PC5-S based sidelink message.

In an embodiment, the apparatus further includes a connecting unit;
the connection unit is used for establishing a unicast connection with the remote UE; and
the receiving unit is used for receiving the first message through the unicast connection.

An embodiment of the present application further provides a processor-readable storage medium, where the processor-readable storage medium stores a computer program, and where the computer program is used to cause a processor to perform any of the above-mentioned methods for entering connected state.

In the methods and apparatuses for entering connected state, the UEs and the network device provided by the embodiments of the present application, the remote UE receives the reconfiguration message transmitted from the network device, where the reconfiguration message includes information of the target relay UE; in case of determining that there are other paths for connecting to the network device, the remote UE transmits the first message to the target relay UE, where the first message is used to trigger the target relay UE to enter connected state from idle state or inactive state, or remain in connected state. As such, the relay UE in non-connected state is triggered to enter connected state based on the first message. In this way, the remote UE may communicate with the network device through the relay UE, which solves the problem in the related art that the remote UE cannot communicate with the network device through the relay UE since the relay UE in non-connected state cannot be triggered to enter connected state in the situation where the remote UE determines that there are other paths for connecting to the network device.

### BRIEF DESCRIPTION OF THE DRAWINGS

To clearly illustrate the solutions in the embodiments of the present application, the drawings used in the description of the embodiments are briefly described below. The drawings in the following description are only some embodiments of the present application, and other drawings may be obtained according to these drawings without any creative effort for those skilled in the art.
FIG. 1 is a schematic diagram of an application scenario according to an embodiment of the present application;
FIG. 2 is a first schematic flowchart of a method for entering connected state according to an embodiment of the present application;
FIG. 3 is a second schematic flowchart of a method for entering connected state according to an embodiment of the present application;
FIG. 4 is a third schematic flowchart of a method for entering connected state according to an embodiment of the present application;
FIG. 5 is a fourth schematic flowchart of a method for entering connected state according to an embodiment of the present application;
FIG. 6 is a fifth schematic flowchart of a method for entering connected state according to an embodiment of the present application;
FIG. 7 is a sixth schematic flowchart of a method for entering connected state according to an embodiment of the present application;
FIG. 8 is a seventh schematic flowchart of a method for entering connected state according to an embodiment of the present application;
FIG. 9 is a schematic structural diagram of a remote user equipment (UE) according to an embodiment of the present application;
FIG. 10 is a schematic structural diagram of a target relay user equipment (UE) according to an embodiment of the present application;
FIG. 11 is a schematic structural diagram of a network device according to an embodiment of the present application;
FIG. 12 is a first schematic structural diagram of an apparatus for entering connected state according to an embodiment of the present application;
FIG. 13 is a second schematic structural diagram of an apparatus for entering connected state according to an embodiment of the present application; and
FIG. 14 is a third schematic structural diagram of an apparatus for entering connected state according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions according to the embodiments of the present application may be applicable to various systems, especially 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote UE, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multiple user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

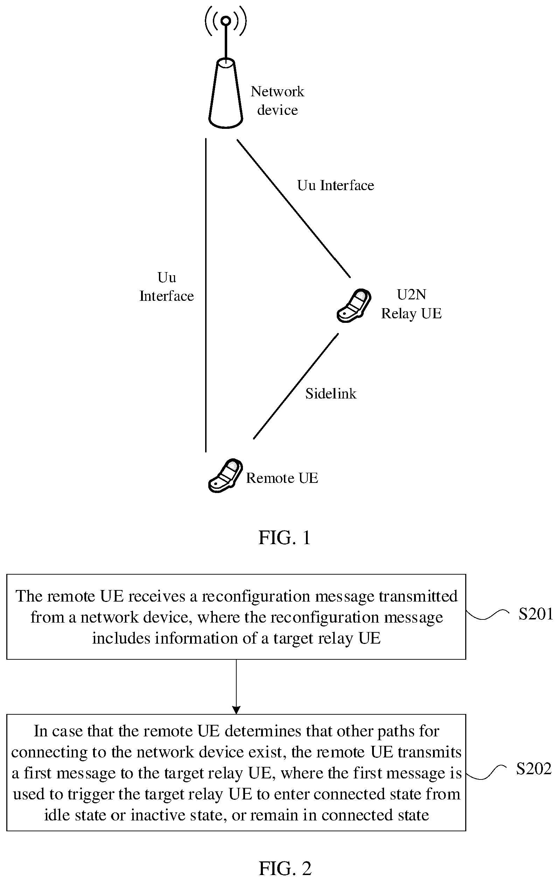

To improve the peak rate and/or reliability of the remote UE, 3GPP supports multi-path transmission. For example, as shown in FIG. 1, FIG. 1 is a schematic diagram of an application scenario according to an embodiment of the present application, that is, the remote UE may support to access the network device through the U2N relay UE and the Uu interface simultaneously and perform data transmission with the network device. In the U2N scenario, the concepts of direct path and indirect path are introduced.

The direct path refers to the direct transmission path used for data transmission between the remote UE and the network device. The direct transmission path means that the data transmission between the remote UE and the network device does not need to be forwarded through the relay UE. The non-direct path is also called indirect path, which refers to the transmission path for data transmission between the remote UE and the network device, where the data transmission needs to be forwarded through the relay UE.

As shown in FIG. 1, the path for data transmission between the remote UE and the network device through the Uu interface is the direct path, and the path for data transmission between the remote UE and the network device through the U2N relay UE is the indirect path. In the indirect path, the remote UE may be connected to the relay UE through a sidelink, where the sidelink is also called a direct link, side or direct communication link, etc. The cell accessed by the remote UE through the U2N relay UE and the cell accessed by the remote UE through the Uu interface may be the same or different cells, which may be set according to actual needs.

Combined with the above description, considering that the remote UE supports multi-path transmission, the remote UE may have at least two paths for connecting to the network device. In case that the network device transmits an RRC reconfiguration message to the remote UE, whether it is adding an indirect path on the basis of the direct path, or performing path switch on an indirect path among the original multiple paths, the network device may transmit the RRC reconfiguration message to the remote UE through the direct path, to communicate with the remote UE through the direct path. The network device does not transmit the RRC reconfiguration message through the relay UE in RRC idle state or RRC inactive state, as such the relay UE in RRC idle state or RRC inactive state cannot enter RRC connected state, and then the remote UE cannot communicate with the network device through the relay UE.

To solve the problem that the remote UE cannot communicate with the network device through the relay UE in case that it is determined that there are other paths for connecting to the network device, an embodiment of the present application provides a method for entering connected state, where the remote UE receives the reconfiguration message transmitted from the network device, the reconfiguration message includes information of a target relay UE; and in case that it is determined that there are other paths for connecting to the network device, a first message is transmitted to the target relay UE, the first message being used to trigger the target relay UE to enter connected state from idle state or inactive state, or remain in connected state.

For the remote UE, if the remote UE needs to communicate with the network device through the target relay UE, the target relay UE needs to enter connected state. However, since the remote UE cannot know the state of the target relay UE, if the target relay UE is in idle state or inactive state, the remote UE expects that the target relay UE enters connected state from idle state or inactive state; if the target relay UE is in connected state, the remote UE expects that the target relay UE continues to remain in connected state. Based on this, the remote UE may transmit the first message to the target relay UE, where the first message is used to trigger the target relay UE to enter connected state from idle state or inactive state, or remain in connected state.

It can be seen from above that the remote UE transmits the first message to the target relay UE to trigger the relay UE in non-connected state to enter connected state. As such, the remote UE may communicate with the network device through the relay UE, which solves the problem in the related art that the remote UE cannot communicate with the network device through the relay UE since the relay UE in non-connected state cannot be triggered to enter connected state in the situation where the remote UE determines that there are other paths for connecting to the network device.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a skilled person in the art based on the embodiments of the present application without any creative effort belong to the scope of the present application.

FIG. 2 is a first schematic flowchart of a method for entering connected state according to an embodiment of the present application. The method for entering connected state may be performed by a remote user equipment (UE), such as a mobile phone, etc. Referring to FIG. 2 , the method for entering connected state includes the following steps.

S201: The remote UE receives a reconfiguration message transmitted from a network device, where the reconfiguration message includes information of a target relay UE.

For example, in the embodiments of the present application, the reconfiguration message may be a radio resource control (RRC) reconfiguration message, and the configuration complete message may be an RRC reconfiguration complete message.

For example, the information of the target relay UE may include an identifier and associated configuration information for the target relay UE, which may be set according to actual needs.

For example, in case that the network device transmits a reconfiguration message to the remote UE, the network device may transmit the reconfiguration message to the remote UE through a direct path, and then the remote UE receives the reconfiguration message; after receiving the reconfiguration message, the remote UE may determine the target relay UE that is expected to be used as a relay for data transmission with the network device based on the information of the target relay UE included in the reconfiguration message and execute the following step S202.

S202: In case that the remote UE determines that other paths for connecting to the network device exist, the remote UE transmits a first message to the target relay UE, where the first message is used to trigger the target relay UE to enter connected state from idle state or inactive state, or remain in connected state.

For example, the first message includes a reconfiguration complete message or a sidelink message, which may be set according to actual needs. Here, the embodiments of the present application only take the first message including the reconfiguration complete message or the sidelink message as an example for explanation, but it does not mean that the embodiments of the present application are limited to that. For example, the sidelink message may be an *RRCReconfigurationSidelink* message or a *RemoteUEInformationSidelink* message, which may be set according to actual needs.

For example, in case that the remote UE transmits the first message to the target relay UE, the remote UE may first establish a unicast connection with the target relay UE and transmit the first message to the target relay UE through the unicast connection; correspondingly, after receiving the first message, the target relay UE may determine the state of the target relay UE itself, and if the target relay UE is in idle state or inactive state, the target relay UE may enter connected state from idle state or inactive state based on the first message; if the target relay UE is in connected state, the target relay UE may continue to remain in connected state based on the first message.

In the embodiments of the present application, if the target relay UE is in idle state, the target relay UE may initiate an RRC setup request procedure, requesting to enter connected state from idle state. The specific implementation may refer to the traditional RRC setup request procedure, which is not repeated in the embodiments of the present application. If the target relay UE is in inactive state, the target relay UE may initiate an RRC resume request procedure, requesting to enter connected state from inactive state. The specific implementation may refer to the traditional RRC resume request procedure, which is not repeated in the embodiments of the present application.

In the embodiments of the present application, the reconfiguration message transmitted from the network device is received, where the reconfiguration message includes information of the target relay UE; and in case that it is determined that there are other paths for connecting to the network device, the first message is transmitted to the target relay UE, and then based on the reconfiguration complete message, the target relay UE enters connected state from idle state or inactive state, or remains in connected state. As such, the relay UE in non-connected state is triggered to enter connected state through the first message, and then the remote UE may communicate with the network device through the relay UE, which solves the problem in the related art that the remote UE cannot communicate with the network device through the relay UE since the relay UE in non-connected state cannot be triggered to enter connected state in the situation where the remote UE determines that there are other paths for connecting to the network device.

Based on the embodiment shown in FIG. 2, in order to facilitate understanding of the method for entering connected state according to an embodiment of the present application, the following describes how to trigger the target relay UE to enter connected state from idle state or inactive state, or remain in connected state through the first message in case that the first message includes the reconfiguration complete message; and how to trigger the target relay UE to enter connected state from idle state or inactive state, or remain in connected state through the first message in case that the first message includes the sidelink message.

For example, in a scenario, the first message includes the reconfiguration complete message, and the reconfiguration message also includes first indication information, where the first indication information is used to indicate the remote UE to transmit the reconfiguration complete message to the network device through the target relay UE. The remote UE may transmit the reconfiguration message to the target relay UE based on the first indication information, to trigger the target relay UE to enter connected state from idle state or inactive state, or remain in connected state through the reconfiguration message.

For example, in an embodiment of the present application, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the primary path for the signaling radio bearer is an indirect path, the transmission path for the signaling radio bearer is an indirect path, the primary path for the signaling radio bearer is a direct path, or the transmission mode for the signaling radio bearer is duplication, which may be configured by the network device for the remote UE.

For this scenario, in case that the first message includes the reconfiguration complete message, the following embodiments are used to illustrate how to trigger, through the reconfiguration complete message, the target relay UE to enter connected state from idle state or inactive state, or remain in connected state.

### Embodiment I

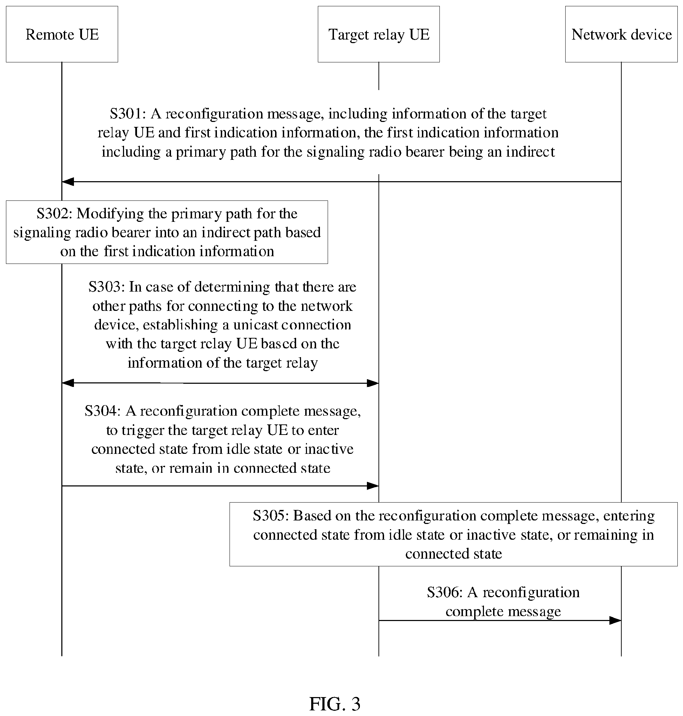

In Embodiment I, for example, the first indication information includes the primary path for the signaling radio bearer being an indirect path. For example, reference may be made to FIG. 3, where FIG. 3 is a second schematic flowchart of a method for entering connected state according to an embodiment of the present application, and the method for entering connected state may include the following steps.

S301: A network device transmits a reconfiguration message to a remote UE, where the reconfiguration message includes information of a target relay UE and first indication information, where the first indication information includes a primary path for the signaling radio bearer being an indirect path.

S302: In case that the remote UE determines that there are other paths for connecting to the network device, the remote UE modifies the primary path for the signaling radio bearer into an indirect path based on the first indication information.

S303: The remote UE establishes a unicast connection with the target relay UE based on the information of the target relay UE.

S304: The remote UE transmits a reconfiguration complete message to the target relay UE through the unicast connection based on the first indication information, to trigger the target relay UE to enter connected state from idle state or inactive state, or remain in connected state.

S305: Based on the reconfiguration complete message, the target relay UE enters connected state from idle state or inactive state, or remains in connected state.

After the target relay UE receives the reconfiguration complete message transmitted from the remote UE, the target relay UE may determine the state of the target relay UE itself; and if the target relay UE is in idle state or inactive state, the target relay UE may enter connected state from idle state or inactive state based on the reconfiguration complete message; if the target relay UE is in connected state, the target relay UE may continue to remain in connected state based on the reconfiguration complete message.

S306: The target relay UE transmits a reconfiguration complete message to the network device, and the indirect path for the remote UE is established.

It may be seen that in Embodiment I, the network device transmits the reconfiguration message to the remote UE, where the reconfiguration message includes the information of the target relay UE and the first indication information, where the first indication information includes the primary path for the signaling radio bearer being an indirect path. Correspondingly, in case that the remote UE determines that there are other paths for connecting to the network device, the remote UE transmits the reconfiguration complete message to the target relay UE based on the first indication information, to trigger the target relay UE to enter connected state from idle state or inactive state, or remain in connected state based on the reconfiguration complete message. As such, the relay UE in non-connected state is triggered to enter connected state through the reconfiguration complete message, and then the remote UE may communicate with the network device through the relay UE, which solves the problem in the related art that the remote UE cannot communicate with the network device through the relay UE since the relay UE in non-connected state cannot be triggered to enter connected state in the situation where the remote UE determines that there are other paths for connecting to the network device.

### Embodiment II

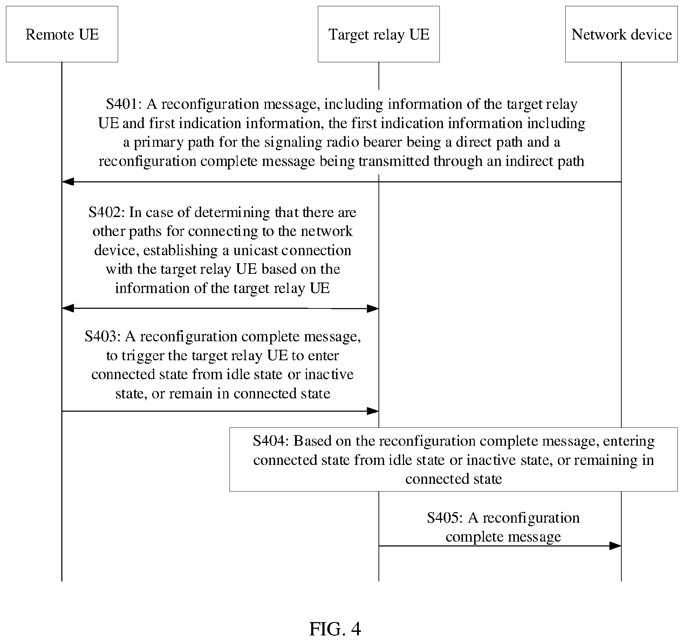

In Embodiment II, for example, the first indication information includes the primary path for the signaling radio bearer being a direct path and the reconfiguration complete message being transmitted through an indirect path. In case that the first indication information includes the primary path for the signaling radio bearer being a direct path and the reconfiguration complete message being transmitted through an indirect path, different from the Embodiment I, the remote UE does not need to modify the primary path for the signaling radio bearer to an indirect path, but needs to transmit a reconfiguration complete message to the network device through the target relay UE. For example, reference may be made to FIG. 4, where FIG. 4 is a third schematic flowchart of a method for entering connected state according to an embodiment of the present application, and the method for entering connected state may include the following steps.

S401: A network device transmits a reconfiguration message to a remote UE, where the reconfiguration message includes information of a target relay UE and first indication information, where the first indication information includes a primary path for the signaling radio bearer being a direct path and a reconfiguration complete message being transmitted through an indirect path.

S402: In case that the remote UE determines that there are other paths for connecting to the network device, the remote UE establishes a unicast connection with the target relay UE based on the information of the target relay UE.

S403: The remote UE transmits a reconfiguration complete message to the target relay UE through the unicast connection based on the first indication information, to trigger the target relay UE to enter connected state from idle state or inactive state, or remain in connected state.

S404: Based on the reconfiguration complete message, the target relay UE enters connected state from idle state or inactive state, or remains in connected state.

After the target relay UE receives the reconfiguration complete message transmitted from the remote UE, the target relay UE may determine the state of the target relay UE itself; and if the target relay UE is in idle state or inactive state, the target relay UE may enter connected state from idle state or inactive state based on the reconfiguration complete message; if the target relay UE is in connected state, the target relay UE may continue to remain in connected state based on the reconfiguration complete message.

S405: The target relay UE transmits a reconfiguration complete message to the network device, and the indirect path for the remote UE is established.

It may be seen that in Embodiment II, the network device transmits the reconfiguration message to the remote UE, where the reconfiguration message includes the information of the target relay UE and the first indication information, and the first indication information includes the primary path for the signaling radio bearer being a direct path and the reconfiguration complete message being transmitted through an indirect path. Correspondingly, in case that the remote UE determines that there are other paths for connecting to the network device, the remote UE transmits the reconfiguration complete message to the target relay UE based on the first indication information, to trigger the target relay UE to enter connected state from idle state or inactive state, or remain in connected state based on the reconfiguration complete message. As such, the relay UE in non-connected state is triggered to enter connected state through the reconfiguration complete message, and then the remote UE may communicate with the network device through the relay UE, which solves the problem in the related art that the remote UE cannot communicate with the network device through the relay UE since the relay UE in non-connected state cannot be triggered to enter connected state in the situation where the remote UE determines that there are other paths for connecting to the network device.

It should be noted that in an embodiment of the present application, in case that the first indication information includes the transmission mode for the signaling radio bearer being duplication transmission, the specific implementation of the remote UE triggering, through the reconfiguration complete message, the target relay UE to enter connected state from idle state or inactive state, or remain in connected state is similar to the specific implementation of the remote UE triggering, through the reconfiguration complete message, the target relay UE to enter connected state from idle state or inactive state, or remain in connected state in case that the first indication information includes the primary path for the signaling radio bearer being a direct path and the reconfiguration complete message being transmitted through an indirect path in above-mentioned Embodiment II. The specific implementation may refer to the relevant description in the above-mentioned Embodiment II, which is not repeated in the embodiments of the present application. It should be noted that, different from the above-mentioned Embodiment II, the remote UE also needs to transmit a reconfiguration complete message to the network device through a direct path.

In an embodiment, in case that the first indication information includes the transmission path identifier for the reconfiguration complete message, where the transmission path identifier includes an identifier of an indirect path, the specific implementation of the remote UE triggering, through the reconfiguration complete message, the target relay UE to enter connected state from idle state or inactive state, or remain in connected state is similar to the specific implementation of the remote UE triggering, through the reconfiguration complete message, the target relay UE to enter connected state from idle state or inactive state, or remain in connected state in case that the first indication information includes the primary path for the signaling radio bearer being a direct path and the reconfiguration complete message being transmitted through an indirect path in above-mentioned Embodiment II. The specific implementation may refer to the relevant description in the above-mentioned Embodiment II, which is not repeated in the embodiments of the present application.

In addition, in case that the first indication information includes the transmission path identifier for the reconfiguration complete message, where the transmission path identifier includes an identifier of an indirect path and an identifier of a direct path, the specific implementation of the remote UE triggering, through the reconfiguration complete message, the target relay UE to enter connected state from idle state or inactive state, or remain in connected state is similar to the specific implementation of the remote UE triggering, through the reconfiguration complete message, the target relay UE to enter connected state from idle state or inactive state, or remain in connected state in case that the first indication information includes the transmission mode for the signaling radio bearer being duplication transmission as mentioned above. The specific implementation may refer to the relevant description as mentioned above, which is not repeated in the embodiments of the present application.

The above embodiment describes a scenario in detail where in case that the first message includes the reconfiguration complete message, the remote UE transmits the reconfiguration complete message to the target relay UE, to trigger, through the reconfiguration complete message, the target relay UE to enter connected state from idle state or inactive state, or remain in connected state. The following describes another scenario in detail where in case that the first message includes the sidelink message, the remote UE transmits the sidelink message to the target relay UE, to trigger, through the sidelink message, the target relay UE to enter connected state from idle state or inactive state, or remain in connected state.

For example, in the another scenario, the first message includes the sidelink message, the sidelink message includes second indication information, where the second indication information is used to indicate the target relay UE to enter connected state from idle state or inactive state, or remain in connected state. The remote UE transmits the sidelink message including the second indication information to the target relay UE, to trigger the target relay UE to enter connected state from idle state or inactive state, or remain in connected state.

In an embodiment, the sidelink message includes at least one of the following:
PC5-radio resource control (RRC) based sidelink message;
sidelink media access control layer control element;
sidelink scheduling control information; or
PC5-S based sidelink message.

For example, in this scenario, the reconfiguration message may further include third indication information, where the third indication information is used to indicate the remote UE whether to transmit the sidelink message to the target relay UE. In case that the reconfiguration message includes the third indication information, the remote UE may determine whether to transmit the sidelink message to the target relay UE based on the third indication information. The embodiment of the present application does not involve the case where the sidelink message is not transmitted to the target relay UE. In case of determining to transmit the sidelink message to the target relay UE based on the third indication information, the sidelink message is transmitted to the target relay UE.

For this scenario, in case that the first message includes the sidelink message, the following embodiments are used to illustrate how to trigger, through the sidelink message, the target relay UE to enter connected state from idle state or inactive state, or remain in connected state.

### Embodiment III

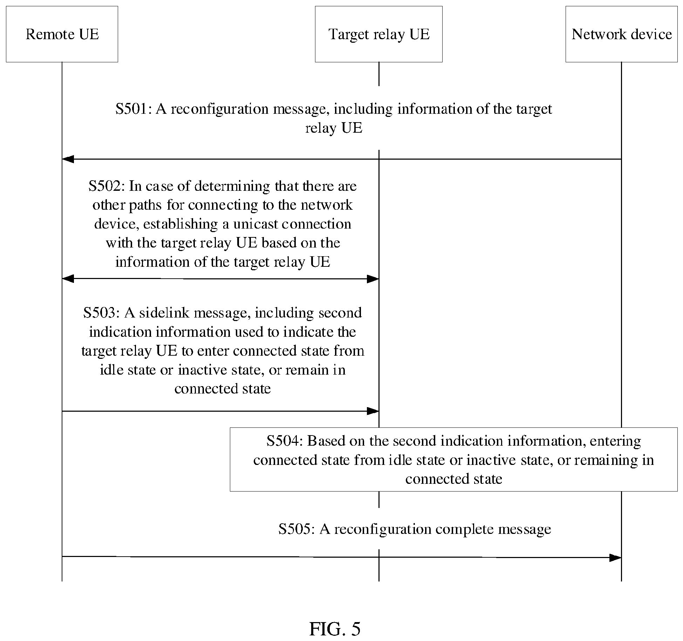

In Embodiment III, the first message includes the sidelink message, and the sidelink message includes second indication information, where the second indication information is used to indicate the target relay UE to enter connected state from idle state or inactive state, or remain in connected state. For example, as shown in FIG. 5, FIG. 5 is a fourth schematic flowchart of a method for entering connected state according to an embodiment of the present application. The method for entering connected state may include the following steps.

S501: A network device transmits a reconfiguration message to a remote UE, where the reconfiguration message includes information of a target relay UE.

S502: In case that the remote UE determines that there are other paths for connecting to the network device, the remote UE establishes a unicast connection with the target relay UE based on the information of the target relay UE.

S503: The remote UE transmits a sidelink message to the target relay UE through the unicast connection, and the sidelink message includes second indication information, where the second indication information is used to indicate the target relay UE to enter connected state from idle state or inactive state, or remain in connected state.

S504: Based on the second indication information, the target relay UE enters connected state from idle state or inactive state, or remains in connected state.

After the target relay UE receives the second indication information transmitted from the remote UE, the target relay UE may determine the state of the target relay UE itself; if the target relay UE is in idle state or inactive state, the target relay UE enters connected state from idle state or inactive state based on the second indication information; if the target relay UE is in connected state, the target relay UE continues to remain in connected state based on the second indication information.

S505: The remote UE transmits a reconfiguration complete message to the network device through a direct path.

It should be noted that, in the embodiment of the present application, considering that the remote UE transmits the reconfiguration complete message to the network device through the direct path, it does not rely on the that target relay UE is in connected state. Therefore, the present application does not limit the execution orders of S504 and S505. For example, S504 may be executed first, and then S505 is executed; or, S505 may be executed first, and then S504 is executed; or, S504 and S505 may be executed simultaneously, which may be set according to the actual needs.

It may be seen that in Embodiment III, the network device transmits the reconfiguration message to the remote UE, where the reconfiguration message includes the information of the target relay UE. Correspondingly, in case that the remote UE determines that there are other paths for connecting to the network device, the remote UE transmits the sidelink message to the target relay UE based on the information of the target relay UE, and the sidelink message includes the second indication information, where the second indication information is used to indicate the target relay UE to enter connected state from idle state or inactive state, or remain in connected state. As such, the target relay UE enters connected state from idle state or inactive state, or remains in connected state based on the second indication information. In this way, the relay UE in non-connected state is triggered to enter connected state through the sidelink message, and then the remote UE may communicate with the network device through the relay UE, which solves the problem in the related art that the remote UE cannot communicate with the network device through the relay UE since the relay UE in non-connected state cannot be triggered to enter connected state in the situation where the remote UE determines that there are other paths for connecting to the network device.

### Embodiment IV

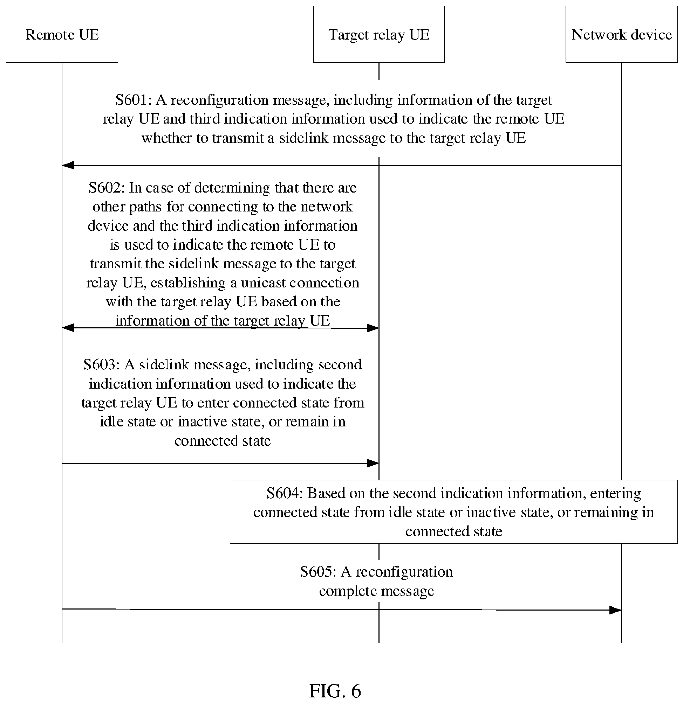

Based on the above Embodiment III, on the basis of Embodiment III, the reconfiguration message may further include third indication information, where the third indication information is used to indicate the remote UE whether to transmit a sidelink message to the target relay UE. For example, as shown in FIG. 6, FIG. 6 is a fifth schematic flowchart of a method for entering connected state according to an embodiment of the present application. The method for entering connected state may include the following steps.

S601: A network device transmits a reconfiguration message to a remote UE, where the reconfiguration message includes information of a target relay UE and third indication information, and the third indication information is used to indicate the remote UE whether to transmit a sidelink message to the target relay UE.

S602: In case that the remote UE determines that there are other paths for connecting to the network device and the third indication information is used to indicate the remote UE to transmit the sidelink message to the target relay UE, the remote UE establishes a unicast connection with the target relay UE based on the information of the target relay UE.

S603: The remote UE transmits the sidelink message to the target relay UE through the unicast connection, where the sidelink message includes second indication information, and the second indication information is used to indicate the target relay UE to enter connected state from idle state or inactive state, or remain in connected state.

S604: Based on the second indication information, the target relay UE enters connected state from idle state or inactive state, or remains in connected state.

After the target relay UE receives the second indication information transmitted from the remote UE, the target relay UE may determine the state of the target relay UE itself; if the target relay UE is in idle state or inactive state, the target relay UE enters connected state from idle state or inactive state based on the second indication information; if the target relay UE is in connected state, the target relay UE continues to remain in connected state based on the second indication information.

S605: The remote UE transmits a reconfiguration complete message to the network device through a direct path.

It should be noted that, in the embodiment of the present application, considering that the remote UE transmits the reconfiguration complete message to the network device through the direct path, it does not rely on the target relay UE being in connected state. Therefore, the present application does not limit the execution orders of S604 and S605. For example, S604 may be executed first, and then S605 is executed; or, S605 may be executed first, and then S604 is executed; or, S604 and S605 may be executed simultaneously, which may be set according to the actual needs.

It may be seen that in Embodiment IV, the network device transmits the reconfiguration message to the remote UE, where the reconfiguration message includes information of the target relay UE and the third indication information. Correspondingly, in case that the remote UE determines that there are other paths for connecting to the network device and the third indication information is used to indicate the remote UE to transmit the sidelink message to the target relay UE, the remote UE transmits the sidelink message to the target relay UE, where the sidelink message includes the second indication information, and the second indication information is used to indicate the target relay UE to enter connected state from idle state or inactive state, or remain in connected state. As such, the target relay UE enters connected state from idle state or inactive state, or remains in connected state based on the second indication information. In this way, the relay UE in non-connected state is triggered to enter connected state through the sidelink message, and then the remote UE may communicate with the network device through the relay UE, which solves the problem in the related art that the remote UE cannot communicate with the network device through the relay UE since the relay UE in non-connected state cannot be triggered to enter connected state in the situation where the remote UE determines that there are other paths for connecting to the network device.

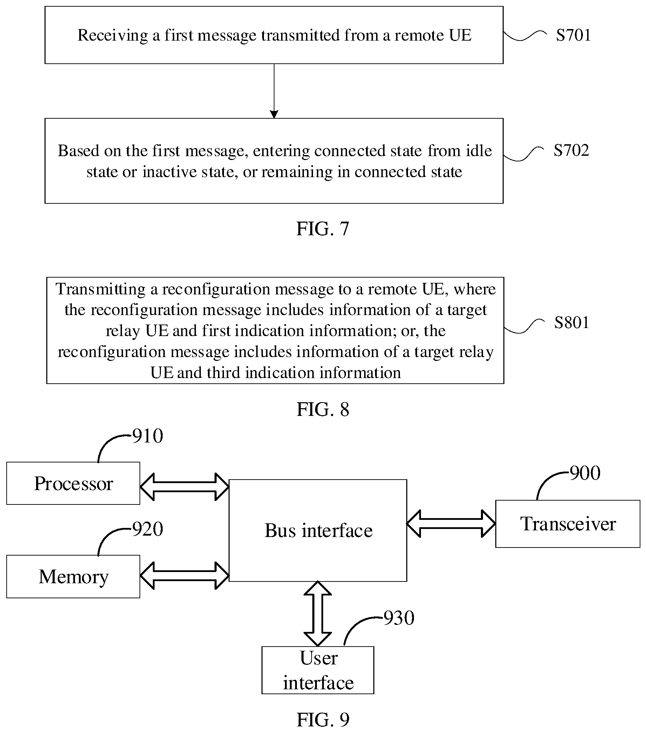

FIG. 7 is a sixth schematic flowchart of a method for entering connected state according to an embodiment of the present application. The method for entering connected state may be performed by a target relay user equipment (UE), such as a mobile phone, etc. As shown in FIG. 7, the method for entering connected state may include:
S701: receiving a first message transmitted from a remote UE; and
S702: based on the first message, entering connected state from idle state or inactive state, or remaining in connected state.

In an embodiment of the present application, the first message includes a reconfiguration complete message, or a sidelink message.

In an embodiment of the present application, the first message includes a reconfiguration complete message, where the reconfiguration message includes first indication information, and where the first indication information is used to indicate the remote UE to transmit the reconfiguration complete message to the network device through the target relay UE.

For example, in an embodiment of the present application, the first indication information includes at least one of the following:
a primary path for a signaling radio bearer being an indirect path;
a transmission path for a signaling radio bearer being an indirect path;
a primary path for a signaling radio bearer being a direct path, and a reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

For example, in an embodiment of the present application, the first message includes a sidelink message, where the sidelink message includes second indication information, and based on the first message, entering connected state from idle state or inactive state, or remaining in connected state includes:
based on the second indication information, entering connected state from idle state or inactive state, or remaining in connected state, where the second indication information is used to indicate the target relay UE to enter connected state from idle state or inactive state, or remain in connected state.

For example, in an embodiment of the present application, the reconfiguration message further includes third indication information, where the third indication information is used to indicate the remote UE whether to transmit the sidelink message to the target relay UE.

For example, in an embodiment of the present application, the sidelink message includes at least one of the following:
PC5-radio resource control (RRC) based sidelink message;
sidelink message for medium access control user edge;
sidelink message for sidelink control information; or
PC5-S based sidelink message.

For example, in an embodiment of the present application, receiving the first message transmitted from the remote UE includes:
establishing a unicast connection with the remote UE; and
receiving the first message through the unicast connection.

It should be noted here that the method for entering connected state performed by the target relay UE provided by the embodiments of the present application is similar to all the methods implemented in the method embodiment performed by the remote relay UE, and may achieve the same effects. The same parts and beneficial effects of the embodiments as the method embodiments are not repeated.

FIG. 8 is a seventh schematic flowchart of a method for entering connected state according to an embodiment of the present application. The method for entering connected state may be performed by a network device, such as a base station, etc. Referring to FIG. 8, the method for entering connected state includes:
S801: transmitting a reconfiguration message to a remote user equipment (UE), where the reconfiguration message includes information of a target relay UE and first indication information; or, the reconfiguration message includes information of a target relay UE and third indication information;
where the first indication information is used to indicate the remote UE to transmit a reconfiguration complete message to the network device through the target relay UE; and where the third indication information is used by the remote UE to determine whether to transmit a sidelink message to the target relay UE.

For example, in an embodiment of the present application, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

For example, in an embodiment of the present application, the sidelink message includes at least one of the following:
PC5-radio resource control (RRC) based sidelink message;
sidelink media access control layer control element;
sidelink scheduling control information; or
PC5-S based sidelink message.

It should be noted here that the method for entering connected state performed by the network device provided by the embodiments of the present application is similar to all the methods implemented in the method embodiment performed by the remote relay UE, and may achieve the same effects. The same parts and beneficial effects of the embodiments as the method embodiments are not repeated.

FIG. 9 is a schematic structural diagram of a remote user equipment (UE) according to an embodiment of the present application. As shown in FIG. 9, the remote UE includes a memory 920, a transceiver 900, and a processor 910;
where the memory 920 is used for storing a computer program; the transceiver 900 is used for receiving and transmitting data under control of the processor 910; and the processor 910 is used for reading the computer program in the memory 920 and performing the following operations:
receiving a reconfiguration message transmitted from a network device, where the reconfiguration message includes information of a target relay UE; and
in case of determining that other paths for connecting to the network device exist, transmitting a first message to the target relay UE, where the first message is used to trigger the target relay UE to enter connected state from idle state or inactive state, or remain in connected state.

In an embodiment, the transceiver 900 is used for receiving and transmitting data under control of the processor 910.

In FIG. 9, a bus architecture may include any number of interconnected buses and bridges, which are linked together through various circuits of one or more processors represented by the processor 910 and one or more memories represented by the memory 920. The bus architecture may also link together various other circuits, such as peripherals, voltage regulators, and power management circuits, etc., which are well known in the art, and therefore are not further described in the present application. The bus interface provides an interface. The transceiver 900 may include multiple elements, i.e., including a transmitter and a receiver, units for providing communication with various other devices over transmission media including wireless channels, wired channels, fiber optic cables, and the like. For different user equipment, a user interface 930 may be an interface capable of externally or internally connecting the required equipment, and the connected equipment includes, but not limited to, a small keypad, a display, a speaker, a microphone, a joystick, and the like.

The processor 910 is responsible for managing the bus architecture and general processing, and the memory 920 may store data used by the processor 910 in case of performing operations.

In an embodiment, the processor 910 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to execute any of the methods performed by the remote UE provided by the embodiments of the present application according to the obtained executable instructions. The processor and the memory may also be arranged physically separated.

In an embodiment, the first message includes a reconfiguration complete message or a sidelink message.

In an embodiment, the first message includes the reconfiguration complete message, and the reconfiguration message further includes first indication information, and where transmitting the first message to the target relay UE includes:
transmitting the reconfiguration complete message to the target relay UE based on the first indication information;
where the first indication information is used to indicate the remote UE to transmit the reconfiguration complete message to the network device through the target relay UE.

In an embodiment, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the first message includes the sidelink message, the sidelink message includes second indication information, and the second indication information is used to indicate the target relay UE to enter connected state from idle state or inactive state, or remain in connected state.

In an embodiment, the reconfiguration message further includes third indication information, and where transmitting the first message to the target relay UE includes:
in case of determining, based on the third indication information, to transmit the sidelink message to the target relay UE, transmitting the sidelink message to the target relay UE;
where the third indication information is used to indicate the remote UE whether to transmit the sidelink message to the target relay UE.

In an embodiment, the sidelink message includes at least one of the following:
PC5-radio resource control (RRC) based sidelink message;
sidelink media access control layer control element;
sidelink scheduling control information; or
PC5-S based sidelink message.

In an embodiment, transmitting the first message to the target relay UE includes:
establishing a unicast connection with the target relay UE; and
transmitting the first message to the target relay UE through the unicast connection.

It should be noted here that the above-mentioned remote UE provided in the embodiment of the present application may implement all the method steps implemented by the above-mentioned method embodiment in which the execution subject is the remote UE, and may achieve the same effects. The same parts and beneficial effects of the embodiments as the method embodiments are not repeated.

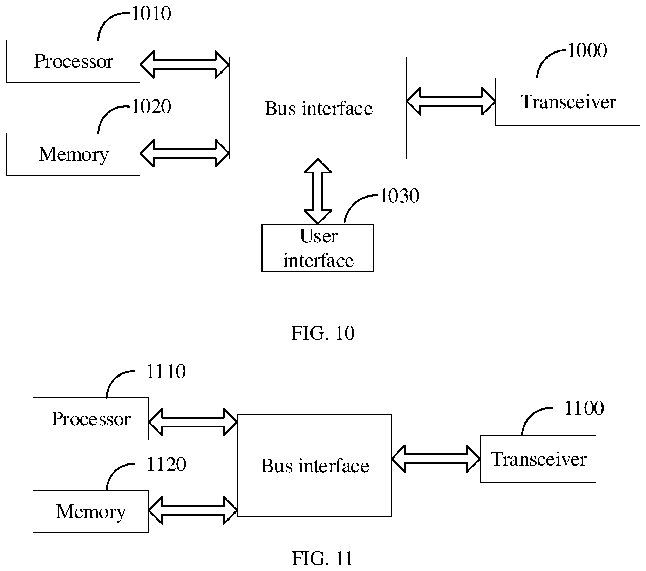

FIG. 10 is a schematic structural diagram of a target relay user equipment (UE) according to an embodiment of the present application. As shown in FIG. 10, the target relay UE includes a memory 1020, a transceiver 1000, and a processor 1010;
where the memory 1020 is used for storing a computer program; the transceiver 1000 is used for receiving and transmitting data under control of the processor 1010; and the processor 1010 is used for reading the computer program in the memory 1020 and performing the following operations:
receiving a first message transmitted from a remote UE; and
based on the first message, entering connected state from idle state or inactive state, or remaining in connected state.

In an embodiment, the transceiver 1000 is used for receiving and transmitting data under the control of the processor 1010 .

In FIG. 10, a bus architecture may include any number of interconnected buses and bridges, which are linked together through various circuits of one or more processors represented by the processor 1010 and one or more memories represented by the memory 1020. The bus architecture may also link together various other circuits, such as peripherals, voltage regulators, and power management circuits, etc., which are well known in the art, and therefore are not further described in the present application. The bus interface provides an interface. The transceiver 1000 may include multiple elements, i.e., including a transmitter and a receiver, units for providing communication with various other devices over transmission media including wireless channels, wired channels, fiber optic cables, and the like. For different user equipment, a user interface 1030 may be an interface capable of externally or internally connecting the required equipment, and the connected equipment includes, but not limited to, a small keypad, a display, a speaker, a microphone, a joystick, and the like.

The processor 1010 is responsible for managing the bus architecture and general processing, and the memory 1020 may store data used by the processor 1010 in case of performing operations.

In an embodiment, the processor 1010 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to execute any of the methods performed by the target relay UE provided by the embodiments of the present application according to the obtained executable instructions. The processor and the memory may also be arranged physically separated.

In an embodiment, the first message includes a reconfiguration complete message or a sidelink message.

In an embodiment, the first message includes the reconfiguration complete message, the reconfiguration message further includes first indication information, and the first indication information is used to indicate the remote UE to transmit the reconfiguration complete message to a network device through the target relay UE.

In an embodiment, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the first message includes the sidelink message, the sidelink message includes second indication information, and where based on the first message, entering connected state from idle state or inactive state, or remaining in connected state includes:
based on the second indication information, entering connected state from idle state or inactive state, or remaining in connected state;
where the second indication information is used to indicate the target relay UE to enter connected state from idle state or inactive state, or remain in connected state.

In an embodiment, the reconfiguration message further includes third indication information, and the third indication information is used to indicate the remote UE whether to transmit the sidelink message to the target relay UE.

In an embodiment, the sidelink message includes at least one of the following:
PC5-radio resource control (RRC) based sidelink message;
sidelink message for medium access control user edge;
sidelink message for sidelink control information; or
PC5-S based sidelink message.

In an embodiment, receiving the first message transmitted from the remote UE includes:
establishing a unicast connection with the remote UE; and
receiving the first message through the unicast connection.

It should be noted here that the above-mentioned target relay UE provided in the embodiment of the present application may implement all the method steps implemented by the above-mentioned method embodiment in which the execution subject is the target relay UE, and may achieve the same effects. The same parts and beneficial effects of the embodiments as the method embodiments are not repeated.

FIG. 11 is a schematic structural diagram of a network device according to an embodiment of the present application. As shown in FIG. 11, the network device includes a memory 1120, a transceiver 1100, and a processor 1110;
where the memory 1120 is used for storing a computer program; the transceiver 1100 is used for receiving and transmitting data under control of the processor 1110; and the processor 1110 is used for reading the computer program in the memory 1120 and performing the following operations:
transmitting a reconfiguration message to a remote user equipment (UE), where the reconfiguration message includes information of a target relay UE and first indication information; or, the reconfiguration message includes information of a target relay UE and third indication information;
where the first indication information is used to indicate the remote UE to transmit a reconfiguration complete message to the network device through the target relay UE;
where the third indication information is used to indicate the remote UE whether to transmit a sidelink message to the target relay UE.

In an embodiment, the transceiver 1100 is used for receiving and transmitting data under the control of the processor 1110 .

In FIG. 11, a bus architecture may include any number of interconnected buses and bridges, which are linked together through various circuits of one or more processors represented by the processor 1110 and one or more memories represented by the memory 1120. The bus architecture may also link together various other circuits, such as peripherals, voltage regulators, and power management circuits, etc., which are well known in the art, and therefore are not further described in the present application. The bus interface provides an interface. The transceiver 1100 may include multiple elements, i.e., including a transmitter and a receiver, units for providing communication with various other devices over transmission media including wireless channels, wired channels, fiber optic cables, and the like. The processor 1110 is responsible for managing the bus architecture and general processing, and the memory 1120 may store data used by the processor 1110 in case of performing operations.

In an embodiment, the processor 1110 may be a central processing unit (CPU), an application specific integrated circuit (ASIC), a field-programmable gate array (FPGA), or a complex programmable logic device (CPLD), the processor may also use a multi-core architecture.

In an embodiment, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the sidelink message includes at least one of the following:
PC5-radio resource control (RRC) based sidelink message;
sidelink media access control layer control element;
sidelink scheduling control information; or
PC5-S based sidelink message.

It should be noted here that the above-mentioned network device provided in the embodiment of the present application may implement all the method steps implemented by the above-mentioned method embodiment in which the execution subject is the network device, and may achieve the same effects. The same parts and beneficial effects of the embodiments as the method embodiments are not repeated.

Embodiment of the present application also provides an apparatus for entering connected state, to solve a problem that the remote UE cannot communicate with the network device through the relay UE in case that there are other paths for connecting to the network device. It should be noted that the apparatus for entering connected state and the method for entering connected state are based on the same concept, and since the principles of the methods and the apparatuses to solve the problem are similar, the implementation of the apparatuses and the methods may be referred to each other, and the details are not repeated.

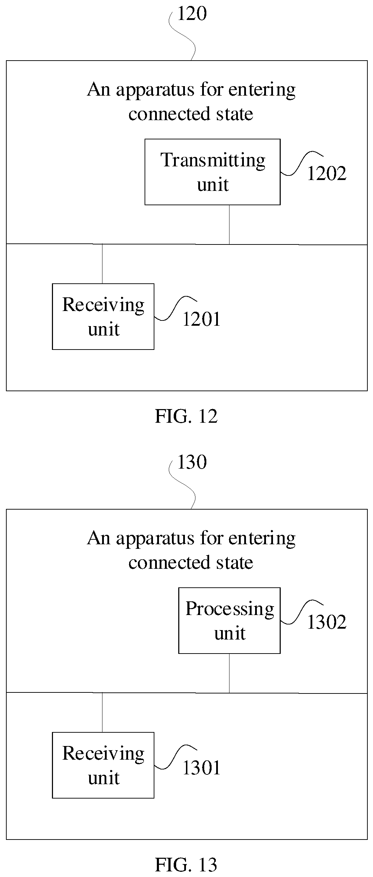

An embodiment of the present application provides an apparatus for entering connected state, which is used in a remote user equipment (UE). As shown in FIG. 12, FIG. 12 is a first schematic structural diagram of an apparatus for entering connected state according to an embodiment of the present application. The apparatus 120 for entering connected state includes:
a receiving unit 1201, used for receiving a reconfiguration message transmitted from a network device, where the reconfiguration message includes information of a target relay UE; and
a transmitting unit 1202, used for transmitting a first message to the target relay UE in case of determining that other paths for connecting to the network device exist, where the first message is used to trigger the target relay UE to enter connected state from idle state or inactive state, or remain in connected state.

In an embodiment, the first message includes a reconfiguration complete message or a sidelink message

In an embodiment, the first message includes the reconfiguration complete message, and the reconfiguration message further includes first indication information;
the transmitting unit 1202 is used for transmitting the reconfiguration complete message to the target relay UE based on the first indication information;
where the first indication information is used to indicate the remote UE to transmit the reconfiguration complete message to the network device through the target relay UE.

In an embodiment, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the first message includes the sidelink message, the sidelink message includes second indication information, and the second indication information is used to indicate the target relay UE to enter connected state from idle state or inactive state, or remain in connected state.

In an embodiment, the reconfiguration message further includes third indication information;
the transmitting unit 1202 is used for transmitting the sidelink message to the target relay UE in case of determining, based on the third indication information, to transmit the sidelink message to the target relay UE;
where the third indication information is used to indicate the remote UE whether to transmit the sidelink message to the target relay UE.

In an embodiment, the sidelink message includes at least one of the following:
PC5-radio resource control (RRC) based sidelink message;
sidelink media access control layer control element;
sidelink scheduling control information; or
PC5-S based sidelink message.

In an embodiment, the apparatus 120 further includes a connecting unit;
the connecting unit is used for establishing a unicast connection with the target relay UE; and
the transmitting unit 1202 is used for transmitting the first message to the target relay UE through the unicast connection.

It should be noted here that the above-mentioned apparatus 120 for entering connected state provided in the embodiment of the present application may implement all the method steps implemented by the above-mentioned method embodiment in which the execution subject is the remote UE, and may achieve the same effects. The same parts and beneficial effects of the embodiments as the method embodiments are not repeated.

An embodiment of the present application provides an apparatus for entering connected state, which is used in a target relay user equipment (UE). As shown in FIG. 13, FIG. 13 is a second schematic structural diagram of an apparatus for entering connected state according to an embodiment of the present application. The apparatus 130 for entering connected state includes:
a receiving unit 1301, used for receiving a first message transmitted from a remote UE; and
a processing unit 1302, used for based on the first message, entering connected state from idle state or inactive state, or remaining in connected state.

In an embodiment, the first message includes a reconfiguration complete message or a sidelink message.

In an embodiment, the first message includes the reconfiguration complete message, the reconfiguration message further includes first indication information, and the first indication information is used to indicate the remote UE to transmit the reconfiguration complete message to a network device through the target relay UE.

In an embodiment, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the first message includes the sidelink message, and the sidelink message includes second indication information;
the processing unit 1302 is used for based on the second indication information, entering connected state from idle state or inactive state, or remaining in connected state;
where the second indication information is used to indicate the target relay UE to enter connected state from idle state or inactive state, or remain in connected state.

In an embodiment, the reconfiguration message further includes third indication information, and the third indication information is used to indicate the remote UE whether to transmit the sidelink message to the target relay UE.

In an embodiment, the sidelink message includes at least one of the following:
PC5-radio resource control (RRC) based sidelink message;
sidelink message for medium access control user edge;
sidelink message for sidelink control information; or
PC5-S based sidelink message.

In an embodiment, the apparatus 130 further includes a connecting unit;
the connection unit is used for establishing a unicast connection with the remote UE; and
the receiving unit 1301 is used for receiving the first message through the unicast connection.

It should be noted here that the above-mentioned apparatus 130 for entering connected state provided in the embodiment of the present application may implement all the method steps implemented by the above-mentioned method embodiment in which the execution subject is the target relay UE, and may achieve the same effects. The same parts and beneficial effects of the embodiments as the method embodiments are not repeated.

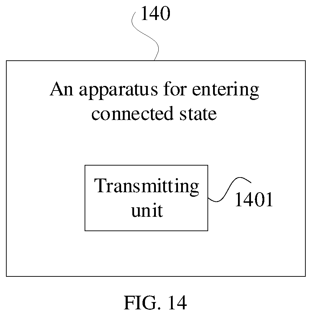

An embodiment of the present application provides an apparatus for entering connected state, which is used in a network device. As shown in FIG. 14, FIG. 14 is a third schematic structural diagram of an apparatus for entering connected state according to an embodiment of the present application. The apparatus 140 for entering connected state includes:
a transmitting unit 1401, used for transmitting a reconfiguration message to a remote user equipment (UE), where the reconfiguration message includes information of a target relay UE and first indication information; or, the reconfiguration message includes information of a target relay UE and third indication information;
where the first indication information is used to indicate the remote UE to transmit a reconfiguration complete message to the network device through the target relay UE;
where the third indication information is used to indicate the remote UE whether to transmit a sidelink message to the target relay UE.

In an embodiment, the first indication information includes at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, where the transmission path identifier includes an identifier of an indirect path, or an identifier of an indirect path and an identifier of a direct path.

In an embodiment, the sidelink message includes at least one of the following:
PC5-radio resource control (RRC) based sidelink message;
sidelink media access control layer control element;
sidelink scheduling control information; or
PC5-S based sidelink message.

It should be noted here that the above-mentioned apparatus 140 for entering connected state provided in the embodiment of the present application may implement all the method steps implemented by the above-mentioned method embodiment in which the execution subject is the network device, and may achieve the same effects. The same parts and beneficial effects of the embodiments as the method embodiments are not repeated

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a USB flash disk, a mobile hard disk, a read-only memory (ROM), a random access memory (RAM), a magnetic disk, or a compact disk.

On the other hand, an embodiment of the present application provides a processor-readable storage medium, where the processor-readable storage medium stores a computer program, and the computer program is used to cause a processor to execute the method provided by the above embodiments. The method includes: receiving a reconfiguration message transmitted from a network device, the reconfiguration message including information of a target relay UE; in case that it is determined that there are other paths for connecting to the network device, transmitting a first message to the target relay UE, where the first message is used to trigger the target relay UE to enter connected state from idle state or inactive state, or remain in connected state.

The processor readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As is appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It is understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for entering connected state, performed by a remote user equipment, UE, comprising:
receiving a reconfiguration message transmitted from a network device, wherein the reconfiguration message comprises information of a target relay UE; and
in case of determining that other paths for connecting to the network device exist, transmitting a first message to the target relay UE, wherein the first message is used to trigger the target relay UE to enter connected state from idle state or inactive state, or remain in connected state.

2. The method of claim 1, wherein the first message comprises a reconfiguration complete message or a sidelink message.

3. The method of claim 2, wherein the first message comprises the reconfiguration complete message, and the reconfiguration message further comprises first indication information, and wherein transmitting the first message to the target relay UE comprises:
transmitting the reconfiguration complete message to the target relay UE based on the first indication information;
wherein the first indication information is used to indicate the remote UE to transmit the reconfiguration complete message to the network device through the target relay UE.

4. The method of claim 3, wherein the first indication information comprises at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, wherein the transmission path identifier comprises an identifier of an indirect path, or an identifier of an indirect path and an identifier of a direct path.

5. The method of claim 2, wherein the first message comprises the sidelink message, the sidelink message comprises second indication information, and the second indication information is used to indicate the target relay UE to enter connected state from idle state or inactive state, or remain in connected state.

6. The method of claim 5, wherein the reconfiguration message further comprises third indication information, and
wherein transmitting the first message to the target relay UE comprises:
in case of determining, based on the third indication information, to transmit the sidelink message to the target relay UE, transmitting the sidelink message to the target relay UE;
wherein the third indication information is used to indicate the remote UE whether to transmit the sidelink message to the target relay UE.

7. The method of claim 5, wherein the sidelink message comprises at least one of the following:
PC5-radio resource control, RRC, based sidelink message;
sidelink media access control layer control element;
sidelink scheduling control information; or
PC5-S based sidelink message.

8. The method of any of claims 1 to 7, wherein transmitting the first message to the target relay UE comprises:
establishing a unicast connection with the target relay UE; and
transmitting the first message to the target relay UE through the unicast connection.

9. A method for entering connected state, performed by a target relay user equipment, UE, comprising:
receiving a first message transmitted from a remote UE; and
based on the first message, entering connected state from idle state or inactive state, or remaining in connected state.

10. The method of claim 9, wherein the first message comprises a reconfiguration complete message or a sidelink message.

11. The method of claim 10, wherein the first message comprises the reconfiguration complete message, the reconfiguration message further comprises first indication information, and the first indication information is used to indicate the remote UE to transmit the reconfiguration complete message to a network device through the target relay UE.

12. The method of claim 11, wherein the first indication information comprises at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, wherein the transmission path identifier comprises an identifier of an indirect path, or an identifier of an indirect path and an identifier of a direct path.

13. The method of claim 10, wherein the first message comprises the sidelink message, the sidelink message comprises second indication information, and
wherein based on the first message, entering connected state from idle state or inactive state, or remaining in connected state comprises:
based on the second indication information, entering connected state from idle state or inactive state, or remaining in connected state;
wherein the second indication information is used to indicate the target relay UE to enter connected state from idle state or inactive state, or remain in connected state.

14. The method of claim 13, wherein the reconfiguration message further comprises third indication information, and the third indication information is used to indicate the remote UE whether to transmit the sidelink message to the target relay UE.

15. The method of claim 14, wherein the sidelink message comprises at least one of the following:
PC5-radio resource control, RRC, based sidelink message;
sidelink message for medium access control user edge;
sidelink message for sidelink control information; or
PC5-S based sidelink message.

16. The method of any of claims 9 to 15, wherein receiving the first message transmitted from the remote UE comprises:
establishing a unicast connection with the remote UE; and
receiving the first message through the unicast connection.

17. A method for entering connected state, performed by a network device, comprising:
transmitting a reconfiguration message to a remote user equipment, UE, wherein the reconfiguration message comprises information of a target relay UE and first indication information; or, the reconfiguration message comprises information of a target relay UE and third indication information;
wherein the first indication information is used to indicate the remote UE to transmit a reconfiguration complete message to the network device through the target relay UE;
wherein the third indication information is used to indicate the remote UE whether to transmit a sidelink message to the target relay UE.

18. The method of claim 17, wherein the first indication information comprises at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, wherein the transmission path identifier comprises an identifier of an indirect path, or an identifier of an indirect path and an identifier of a direct path.

19. The method of claim 17 or 18, wherein the sidelink message comprises at least one of the following:
PC5-radio resource control, RRC, based sidelink message;
sidelink media access control layer control element;
sidelink scheduling control information; or
PC5-S based sidelink message.

20. A remote user equipment, UE, comprising a memory, a transceiver, and a processor;
wherein the memory is used for storing a computer program; the transceiver is used for receiving and transmitting data under control of the processor; and the processor is used for reading the computer program in the memory and performing the following operations:
receiving a reconfiguration message transmitted from a network device, wherein the reconfiguration message comprises information of a target relay UE; and
in case of determining that other paths for connecting to the network device exist, transmitting a first message to the target relay UE, wherein the first message is used to trigger the target relay UE to enter connected state from idle state or inactive state, or remain in connected state.

21. The remote UE of claim 20, wherein the first message comprises a reconfiguration complete message or a sidelink message.

22. The remote UE of claim 21, wherein the first message comprises the reconfiguration complete message, and the reconfiguration message further comprises first indication information, and
wherein transmitting the first message to the target relay UE comprises:
transmitting the reconfiguration complete message to the target relay UE based on the first indication information;
wherein the first indication information is used to indicate the remote UE to transmit the reconfiguration complete message to the network device through the target relay UE.

23. The remote UE of claim 22, wherein the first indication information comprises at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, wherein the transmission path identifier comprises an identifier of an indirect path, or an identifier of an indirect path and an identifier of a direct path.

24. The remote UE of claim 21, wherein the first message comprises the sidelink message, the sidelink message comprises second indication information, and the second indication information is used to indicate the target relay UE to enter connected state from idle state or inactive state, or remain in connected state.

25. The remote UE of claim 21, wherein the reconfiguration message further comprises third indication information, and wherein transmitting the first message to the target relay UE comprises:
in case of determining, based on the third indication information, to transmit the sidelink message to the target relay UE, transmitting the sidelink message to the target relay UE;
wherein the third indication information is used to indicate the remote UE whether to transmit the sidelink message to the target relay UE.

26. The remote UE of claim 24, wherein the sidelink message comprises at least one of the following:
PC5-radio resource control, RRC, based sidelink message;
sidelink media access control layer control element;
sidelink scheduling control information; or
PC5-S based sidelink message.

27. The remote UE of any of claims 20 to 26, wherein transmitting the first message to the target relay UE comprises:
establishing a unicast connection with the target relay UE; and
transmitting the first message to the target relay UE through the unicast connection.

28. A target relay user equipment, UE, comprising a memory, a transceiver, and a processor;
wherein the memory is used for storing a computer program; the transceiver is used for receiving and transmitting data under control of the processor; and the processor is used for reading the computer program in the memory and performing the following operations:
receiving a first message transmitted from a remote UE; and
based on the first message, entering connected state from idle state or inactive state, or remaining in connected state.

29. The target relay UE of claim 28, wherein the first message comprises a reconfiguration complete message or a sidelink message.

30. The target relay UE of claim 29, wherein the first message comprises the reconfiguration complete message, the reconfiguration message further comprises first indication information, and the first indication information is used to indicate the remote UE to transmit the reconfiguration complete message to a network device through the target relay UE.

31. The target relay UE of claim 30, wherein the first indication information comprises at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, wherein the transmission path identifier comprises an identifier of an indirect path, or an identifier of an indirect path and an identifier of a direct path.

32. The target relay UE of claim 29, wherein the first message comprises the sidelink message, the sidelink message comprises second indication information, and
wherein based on the first message, entering connected state from idle state or inactive state, or remaining in connected state comprises:
based on the second indication information, entering connected state from idle state or inactive state, or remaining in connected state;
wherein the second indication information is used to indicate the target relay UE to enter connected state from idle state or inactive state, or remain in connected state.

33. The target relay UE of claim 32, wherein the reconfiguration message further comprises third indication information, and the third indication information is used to indicate the remote UE whether to transmit the sidelink message to the target relay UE.

34. The target relay UE of claim 33, wherein the sidelink message comprises at least one of the following:
PC5-radio resource control, RRC, based sidelink message;
sidelink message for medium access control user edge;
sidelink message for sidelink control information; or
PC5-S based sidelink message.

35. The target relay UE of any of claims 28 to 34, wherein receiving the first message transmitted from the remote UE comprises:
establishing a unicast connection with the remote UE; and
receiving the first message through the unicast connection.

36. A network device, comprising a memory, a transceiver, and a processor;
wherein the memory is used for storing a computer program; the transceiver is used for receiving and transmitting data under control of the processor; and the processor is used for reading the computer program in the memory and performing the following operations:
transmitting a reconfiguration message to a remote user equipment, UE, wherein the reconfiguration message comprises information of a target relay UE and first indication information; or, the reconfiguration message comprises information of a target relay UE and third indication information;
wherein the first indication information is used to indicate the remote UE to transmit a reconfiguration complete message to the network device through the target relay UE;
wherein the third indication information is used to indicate the remote UE whether to transmit a sidelink message to the target relay UE.

37. The network device of claim 36, wherein the first indication information comprises at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, wherein the transmission path identifier comprises an identifier of an indirect path, or an identifier of an indirect path and an identifier of a direct path.

38. The network device of claim 36 or 37, wherein the sidelink message comprises at least one of the following:
PC5-radio resource control, RRC, based sidelink message;
sidelink media access control layer control element;
sidelink scheduling control information; or
PC5-S based sidelink message.

39. An apparatus for entering connected state, used in a remote user equipment, UE, comprising:
a receiving unit, used for receiving a reconfiguration message transmitted from a network device, wherein the reconfiguration message comprises information of a target relay UE; and
a transmitting unit, used for transmitting a first message to the target relay UE in case of determining that other paths for connecting to the network device exist, wherein the first message is used to trigger the target relay UE to enter connected state from idle state or inactive state, or remain in connected state.

40. The apparatus of claim 39, wherein the first message comprises a reconfiguration complete message or a sidelink message

41. The apparatus of claim 40, wherein the first message comprises the reconfiguration complete message, and the reconfiguration message further comprises first indication information;
wherein the transmitting unit is used for transmitting the reconfiguration complete message to the target relay UE based on the first indication information;
wherein the first indication information is used to indicate the remote UE to transmit the reconfiguration complete message to the network device through the target relay UE.

42. The apparatus of claim 41, wherein the first indication information comprises at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, wherein the transmission path identifier comprises an identifier of an indirect path, or an identifier of an indirect path and an identifier of a direct path.

43. The apparatus of claim 40, wherein the first message comprises the sidelink message, the sidelink message comprises second indication information, and the second indication information is used to indicate the target relay UE to enter connected state from idle state or inactive state, or remain in connected state.

44. The apparatus of claim 43, wherein the reconfiguration message further comprises third indication information;
wherein the transmitting unit is used for transmitting the sidelink message to the target relay UE in case of determining, based on the third indication information, to transmit the sidelink message to the target relay UE;
wherein the third indication information is used to indicate the remote UE whether to transmit the sidelink message to the target relay UE.

45. The apparatus of claim 43, wherein the sidelink message comprises at least one of the following:
PC5-radio resource control, RRC, based sidelink message;
sidelink media access control layer control element;
sidelink scheduling control information; or
PC5-S based sidelink message.

46. The apparatus of any of claims 39 to 45, further comprising a connecting unit;
wherein the connecting unit is used for establishing a unicast connection with the target relay UE; and
wherein the transmitting unit is used for transmitting the first message to the target relay UE through the unicast connection.

47. An apparatus for entering connected state, used in a target relay user equipment, UE, comprising:
a receiving unit, used for receiving a first message transmitted from a remote UE; and
a processing unit, used for based on the first message, entering connected state from idle state or inactive state, or remaining in connected state.

48. The apparatus of claim 47, wherein the first message comprises a reconfiguration complete message or a sidelink message.

49. The apparatus of claim 48, wherein the first message comprises the reconfiguration complete message, the reconfiguration message further comprises first indication information, and the first indication information is used to indicate the remote UE to transmit the reconfiguration complete message to a network device through the target relay UE.

50. The apparatus of claim 49, wherein the first indication information comprises at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, wherein the transmission path identifier comprises an identifier of an indirect path, or an identifier of an indirect path and an identifier of a direct path.

51. The apparatus of claim 48, wherein the first message comprises the sidelink message, and the sidelink message comprises second indication information;
wherein the processing unit is used for based on the second indication information, entering connected state from idle state or inactive state, or remaining in connected state;
wherein the second indication information is used to indicate the target relay UE to enter connected state from idle state or inactive state, or remain in connected state.

52. The apparatus of claim 51, wherein the reconfiguration message further comprises third indication information, and the third indication information is used to indicate the remote UE whether to transmit the sidelink message to the target relay UE.

53. The apparatus of claim 52, wherein the sidelink message comprises at least one of the following:
PC5-radio resource control, RRC, based sidelink message;
sidelink message for medium access control user edge;
sidelink message for sidelink control information; or
PC5-S based sidelink message.

54. The apparatus of any of claims 47 to 53, further comprising a connecting unit;
wherein the connection unit is used for establishing a unicast connection with the remote UE; and
wherein the receiving unit is used for receiving the first message through the unicast connection.

55. An apparatus for entering connected state, used in a network device, comprising:
a transmitting unit, used for transmitting a reconfiguration message to a remote user equipment, UE, wherein the reconfiguration message comprises information of a target relay UE and first indication information; or, the reconfiguration message comprises information of a target relay UE and third indication information;
wherein the first indication information is used to indicate the remote UE to transmit a reconfiguration complete message to the network device through the target relay UE;
wherein the third indication information is used to indicate the remote UE whether to transmit a sidelink message to the target relay UE.

56. The apparatus of claim 55, wherein the first indication information comprises at least one of the following:
a primary path for a signaling radio bearer being an indirect path;
a transmission path for a signaling radio bearer being an indirect path;
a primary path for a signaling radio bearer being a direct path, and the reconfiguration complete message being transmitted through an indirect path;
a transmission mode for a signaling radio bearer being duplication transmission; or
a transmission path identifier for the reconfiguration complete message, wherein the transmission path identifier comprises an identifier of an indirect path, or an identifier of an indirect path and an identifier of a direct path.

57. The apparatus of claim 55 or 56, wherein the sidelink message comprises at least one of the following:
PC5-radio resource control, RRC, based sidelink message;
sidelink media access control layer control element;
sidelink scheduling control information; or
PC5-S based sidelink message.

58. A processor-readable storage medium, wherein the processor-readable storage medium stores a computer program, the computer program being used to cause a processor to perform the method of any of claims 1 to 8; or, perform the method of any of claims 9 to 16; or, perform the method of any of claims 17 to 19.
